# EUROPEAN PATENT APPLICATION

(11) **EP 4 763 482 A1**
(43) Date of publication of application: **24.06.2026**
(21) Application number: 25745500.6
(22) Date of filing: 06.01.2025
(51) Int. Cl.: B29C 65/00, B29C 65/78, H01M 10/04, H01M 50/105, B29L 31/00

(54) **APPARATUS AND METHOD FOR MANUFACTURING SECONDARY BATTERY**

(30) Priority: 25.01.2024 KR 20240011441
(71) Applicant: LG Energy Solution, Ltd., Seoul 07335 (KR)
(72) Inventor: JANG, In Jae, Daejeon 34122 (KR)
(74) Representative: Goddar, Heinz J.
(86) International application number: PCT/KR2025/000222
(87) International publication number: WO 2025/159392

(57) **Abstract**

The present invention relates to an apparatus and method for manufacturing a secondary battery, and more particularly, to an apparatus for manufacturing a secondary battery, in which, in a post-processing process of a pouch-type secondary battery, main sealing is enabled in a state, in which the secondary battery stands vertically, to eliminate processes such as pre-sealing and pre-cutting, thereby reducing an manufacturing equipment layout and reducing a cost of a pouch through reduction of a pouch gas pocket part.

## Description

### TECHNICAL FIELD

### CROSS-REFERENCE TO RELATED APPLICATION

The present application claims the benefit of the priority of Korean Patent Application No. 10-2024-0011441, filed on January 25, 2024, which is hereby incorporated by reference in its entirety.

### TECHNICAL FIELD

The present invention relates to an apparatus and method for manufacturing a secondary battery, and more particularly, to an apparatus for manufacturing a secondary battery, in which, in a post-processing process of a pouch-type secondary battery, main sealing is enabled in a state, in which the secondary battery stands vertically, to eliminate processes such as pre-sealing and pre-cutting, thereby reducing an manufacturing equipment layout and reducing a cost of a pouch through reduction of a pouch gas pocket part.

### BACKGROUND ART

In general, secondary batteries include nickel-cadmium batteries, nickel-hydrogen batteries, lithium ion batteries, and lithium ion polymer batteries. Such a secondary battery is being applied to and used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

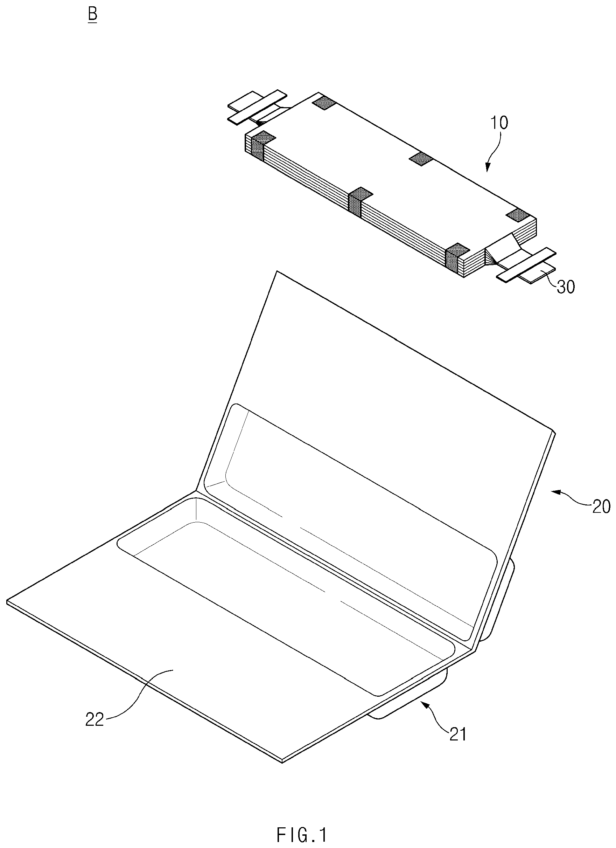

Referring to FIG. 1, to manufacture such a secondary battery B, first, electrode active material slurry is applied to a positive electrode current collector and a negative electrode current collector to manufacture a positive electrode and a negative electrode. Then, the electrodes are stacked on both sides of a separator to form an electrode assembly having a predetermined shape. In addition, a cup part 21 of a pouch case 20 (hereinafter, referred to as a pouch) may accommodate an electrode 10 and be sealed after injecting an electrolyte to manufacture an initial cell (secondary battery) B. In the secondary battery B, an electrode lead 30 connected to the electrode assembly 10 may protrude in both directions.

Referring to FIG. 1, in the initial secondary battery B, the pouch 20 may include a gas pocket part 22 extending to one side of the cup part 21 in which the electrode assembly 10 is accommodated. After the electrode assembly 10 and the electrolyte (not shown) are accommodated in the cup part 21, an edge of the pouch 20 may be sealed.

In this case, the sealing may be performed on an edge of the cup part 21 and an outer edge of the gas pocket part 22. That is, an edge of an area on which the cup part 21 and the gas pocket part 22 are combined may be sealed in a closed curve to perform sealing so that the area on which the cup part 21 and the gas pocket part 22 are combined is sealed from the outside. When the initial secondary battery B is manufactured in the shape that is sealed from the outside, a post-processing process may be performed to manufacture a final cell by post-processing the initial secondary battery. The post-processing process may be a final process of charging/discharging and stabilizing the pouch-type secondary battery, measuring data, and sorting the pouch-type secondary battery.

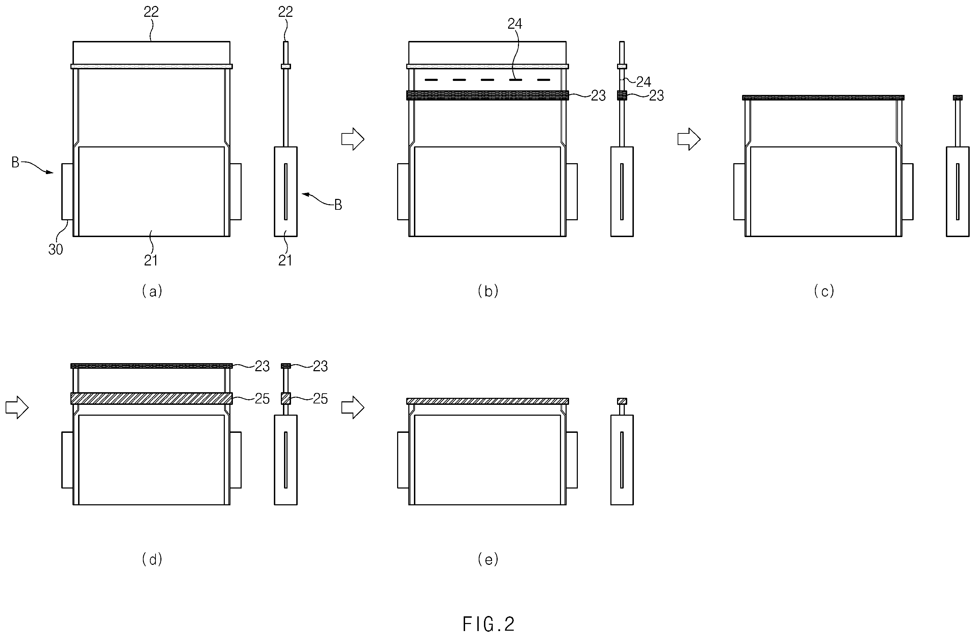

Referring to FIG. 2, the initial secondary battery manufactured in this manner may undergo the post-processing process, and the post-processing process may include an activation charging process, a piercing process, a pre-sealing process, a pre-cutting process, a main-sealing process, and a trimming process.

First, referring to FIG. 2(a), the activation charging process may be a process for initially charging the secondary battery. In this process, the electrolyte and an electrode inside the pouch react during the charging to generate gases such as C₂H₄, CO, C₂H₂, H₂, and CO₂. The gases generated as described above may be removed in a degas process.

For reference, FIG. 2(a) illustrates two drawings. A left drawing is a front view (illustrating a wide surface) of the secondary battery, and a right drawing is a front view of the secondary battery viewed from a right side. All the drawings (a) to (e) of FIG. 2 below illustrate front and side views in the same manner.

Referring to FIG. 2B, the piercing process and the pre-sealing process may be performed as the process for degassing.

The piercing process may be a process of forming a hole in the gas pocket part through a sharp unit to release a gas to the outside. A portion in which the hole is formed may be a piercing part 24. This process may be performed within a chamber having vacuum. The vacuum has to be formed outside the pouch 20 so that the gas inside the pouch 20 is escaped smoothly.

The pre-sealing process may be an operation of sealing the pouch 20 at a position between the hole formed by the piercing process and the cup part 21 of the pouch. The sealing may be achieved through the pre-sealing. However, to secure a length of an edge portion of the pouch, which is required in a subsequent process, the pre-sealing may be performed at a position that is closer to (= more adjacent to) the piercing part 24 than the cup part 21 of the pouch. Since the pre-sealing process does not require a sealing part to be formed at an exact position, the sealing may be performed in a state in which the secondary battery stands vertically as illustrated in FIG. 2(b).

Referring to the pre-cutting process of FIG. 2(c), the pre-cutting process may be performed after the pre-sealing process. The pre-cutting process may be a process of performing cutting by using the pre-sealing part 23 as a center. Since the sealing is achieved in the pre-sealing part 23, this may be a process of cutting an unnecessary portion after the pre-sealing part 23.

Referring to FIG. 2(d), the main-sealing process may be a process of performing the sealing on the area between the pre-sealing part 23 and the pouch cup part 21. The sealing may be performed at a position that is more biased toward the pouch cup part 21 than the pre-sealing part 23. The main-sealing part 25 may be formed by the main-sealing process.

The main sealing may be a process of securing an area for double side folding. The double side folding is a process of folding the edge of the pouch twice to provide a neat appearance, and is performed so that the edge of the pouch is folded to a set size. Thus, the main-sealing process needs to be performed at the exact position. For example, the main sealing has to satisfy a die-sealing gap d and sealing thickness references.

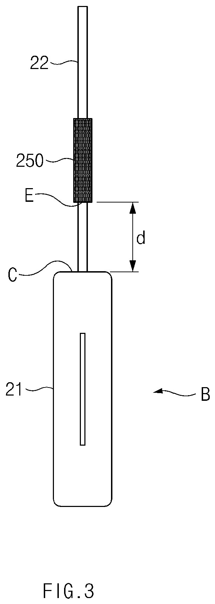

Referring to FIG. 3, the die-sealing gap d refers to a distance between a lower end E of the pouch sealing part 250, on which the main sealing is performed, and an upper end C of the cup part 21. The main-sealing process has to be performed so that the die-sealing gap is formed to a predetermined design value.

In the related art, to satisfy the reference of the die-sealing gap d, the main-sealing process was performed in a state in which the secondary battery lies down. The secondary battery was placed to lie on a die that performs the main sealing, and then, the sealing was performed by the reference. Although FIGS 2(d) and 2(e) are illustrated in a state in which the secondary battery stands up for convenience of illustration, the process itself is performed in a state in which the secondary battery B lies horizontally.

FIG. 2(e) illustrates the trimming process performed after the main-sealing process. The trimming process is a process of cutting an unnecessary portion after the main-sealing part 25.

In the related art, the main-sealing process described above could not be performed in the state in which the secondary battery stands vertically. This was because a reference position of the die-sealing gap d is not determined. Thus, there was a problem that the process is becoming longer and more complicated.

### DISCLOSURE OF THE INVENTION

### TECHNICAL PROBLEM

The present invention has been made to solve the above problems, and an object of the present invention is to provide an apparatus for manufacturing a secondary battery, in which, in a post-processing process of a pouch-type secondary battery, main sealing is enabled in a state, in which the secondary battery stands vertically, to eliminate processes such as pre-sealing and pre-cutting, thereby reducing an manufacturing equipment layout and reducing a cost of a pouch through reduction of a pouch gas pocket part.

### TECHNICAL SOLUTION

An apparatus for manufacturing a secondary battery including an electrode assembly and a pouch configured to accommodate the electrode assembly in a cup part having a recessed shape according to the present invention includes: a chamber having vacuum therein; a support unit configured to support the secondary battery (B) disposed inside the chamber and allow the secondary battery to move upward; an align unit configured to stop the secondary battery so that the secondary battery ascending by the support unit is disposed at a reference position; a pusher unit configured to press the secondary battery from both sides so as to fix the position of the secondary battery after the secondary battery is stopped by the align unit; a piercing unit configured to define a hole in a portion of the pouch after fixing the position of the secondary battery by the pusher unit; and a sealing unit configured to seal the pouch between the portion of the pouch, in which the hole is defined by the piercing unit, and the cup part of the pouch, in which the electrode assembly is accommodated.

The pusher unit may be configured to guide the ascending movement of the secondary battery when the secondary battery moves upward by the support unit.

The align unit may include an align arm part configured to support the cup part of the pouch and stop the secondary battery.

The align unit may include an align body part extending downward from an end of the align arm part.

The align arm part may be configured to stop the secondary battery so that the secondary battery is disposed at the reference position, and
the reference position may be defined so that a distance between a lower end (E) of the pouch sealing part that is an area, on which the pouch is sealed by the sealing unit, and an upper end (C) of the cup part of the pouch is defined as a predetermined distance (d).

The support unit may have a shape extending in a longitudinal direction (L) of the secondary battery.

The apparatus may further include a moving unit configured to allow the support unit to move upward.

The moving unit may include: a cylinder member that is movable vertically; and an elastic member that is stretchable in a direction parallel to the direction in which the secondary battery moves upward, wherein the cylinder member may be configured to support the support unit through the elastic member.

The align unit may include a first align unit and a second align unit, wherein the first align unit and the second align unit may be spaced a predetermined distance from each other in the longitudinal direction of the secondary battery.

A method for manufacturing a secondary battery including an electrode assembly and a pouch configured to accommodate the electrode assembly in a cup part having a recessed shape according to the present invention includes: a preparation process of disposing the secondary battery inside a chamber having vacuum therein; an ascending process of allowing the secondary battery to move upward by using a support unit that supports the secondary battery disposed inside the chamber; an aligning process of stopping the secondary battery using an align unit so that the secondary battery ascending by the support unit is disposed at a reference position; a fixing process of pressing the secondary battery from both sides by using a pusher unit to fix a position of the secondary battery after the secondary battery is stopped in the aligning process; a piercing process of forming a hole in a portion of the pouch by using a piercing unit after the position of the secondary battery is fixed in the fixing process; and a sealing process of sealing the pouch by using a sealing unit between a portion of the pouch, in which the hole is formed, and a cup part of the pouch, in which the electrode assembly is accommodated.

The method may further include, before the ascending process, a forward moving process of the align unit, in which the align unit moves in a direction closer to the secondary battery.

The method may further include, after the fixing process, a backward moving process of the align unit, in which the align unit moves in a direction away from the secondary battery.

### ADVANTAGEOUS EFFECTS

In the apparatus and method for manufacturing the secondary battery according to the present invention, in the post-processing process of the pouch-type secondary battery, the main sealing may be enabled in the state, in which the secondary battery stands vertically, to eliminate the processes such as the pre-sealing and the pre-cutting, thereby reducing the manufacturing equipment layout and reducing the cost of the pouch through the reduction of the pouch gas pocket part.

### BRIEF DESCRIPTION OF THE DRAWINGS

FIG. 1 is an exploded perspective view illustrating a second battery that undergoes a post-processing process in the present invention.
FIG. 2 is front and side views of each process that is performed in a post-processing process in a secondary battery according to the related art.
FIG. 3 is a side view illustrating only a secondary battery that undergoes a post-processing process in the present invention.
FIG. 4 is a side view illustrating an apparatus for manufacturing a secondary battery according to Embodiment 1 of the present invention.
FIG. 5 is a front view illustrating a portion of the apparatus for manufacturing the secondary battery according to Embodiment 1 of the present invention.
FIG. 6 is a side view illustrating a process of post-processing a secondary battery using an apparatus for manufacturing a secondary battery according to an embodiment of the present invention.
FIG. 7 is a diagram illustrating a method for manufacturing a secondary battery according to Embodiment 2 of the present invention.
FIG. 8 is front and side views illustrating processes of post-processing a secondary battery that varies according to an embodiment of the present invention.

### MODE FOR CARRYING OUT THE INVENTION

Hereinafter, aspects of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

### Embodiment 1

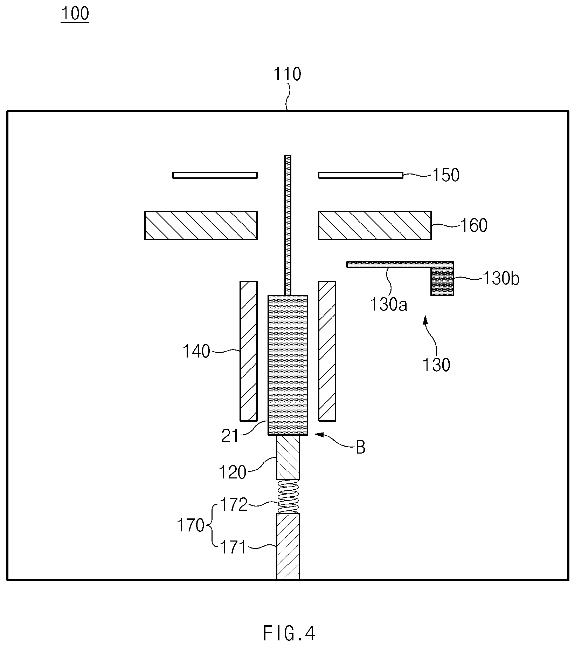

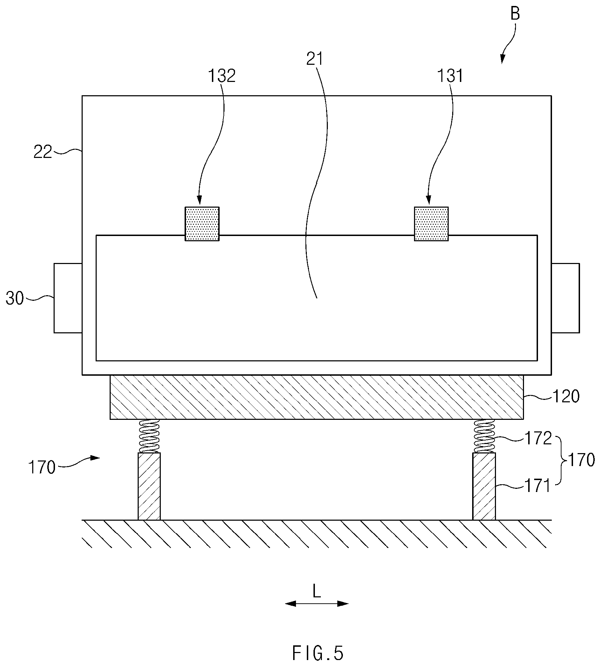

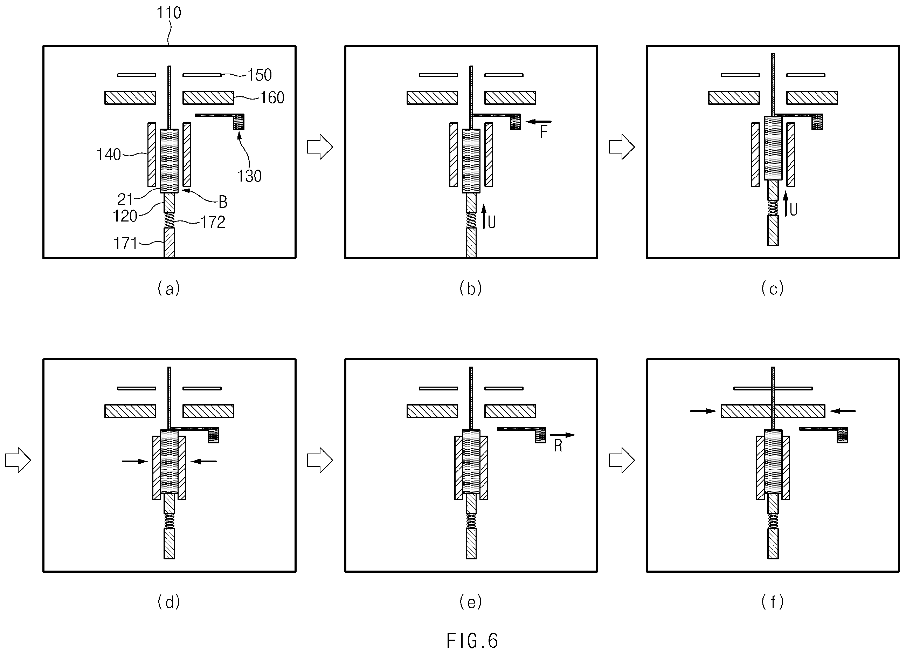

FIG. 1 is an exploded perspective view illustrating a second battery that undergoes a post-processing process in the present invention. FIG. 3 is a side view illustrating only a secondary battery that undergoes a post-processing process in the present invention. FIG. 4 is a side view illustrating an apparatus for manufacturing a secondary battery according to Embodiment 1 of the present invention. FIG. 5 is a front view illustrating a portion of the apparatus for manufacturing the secondary battery according to Embodiment 1 of the present invention. FIG. 6 is a side view illustrating a process of post-processing a secondary battery using an apparatus for manufacturing a secondary battery according to an embodiment of the present invention.

First, referring to FIG. 1, and FIGS. 4 and 5, an apparatus 100 for manufacturing a secondary battery according to Embodiment 1 of the present invention relates to an apparatus 100 for manufacturing a secondary battery, which manufactures a secondary battery B including an electrode assembly 10 and a pouch 20 that accommodates the electrode assembly 10 in a cup part 21 having a recessed shape.

First, the apparatus 100 for manufacturing the secondary battery according to Embodiment 1 of the present invention may include a chamber 110, a support unit 120, an align unit 130, a pusher unit 140, a piercing unit 150, and a sealing unit 160.

The chamber 110 may be configured to form vacuum therein. The secondary battery B may be disposed inside the chamber 110. The secondary battery B may be disposed to stand vertically. To discharge a gas inside the pouch 20 of the secondary battery B, which is generated during an activation charging process, the inside of the chamber 110 may be formed as vacuum or a negative pressure. Thus, the gas inside the secondary battery B may be escaped smoothly through a piercing hole.

The support unit 120 may be configured to support the secondary battery B disposed inside the chamber 110. The support unit 120 may move upward by a moving unit 170 discussed below. In addition, as the support unit 120 moves upward, the secondary battery B may move upward. Referring to FIG. 5, the support unit 120 may have a shape extending in a longitudinal direction L of the secondary battery B. Thus, the secondary battery B may be stably supported. That is, the secondary battery B may be well maintained in a horizontal state without being tilted to one side.

The align unit 130 may be configured to stop the secondary battery B so that the secondary battery B ascending by the support unit 120 is disposed at a reference position. For this, the align unit 130 may approach the secondary battery B and then be stopped again before or during a process in which the secondary battery B ascends by the support unit 120.

Specifically, the align unit 130 may include an align arm part 130a and an align body part. The align arm part 130a may be configured to support the cup part 21 of the pouch and stop the secondary battery B. The align body part 130b may be configured to extend downward from an end of the align arm part 130a. Referring to the drawing, the align arm part 130a may have a bar shape extending in a horizontal direction. The align body part 130b may have a shape extending downward from a right end of the align arm part 130a. In addition, a thickness of the align body part 130b may be thicker than a thickness of the align arm part 130a. Thus, the align unit 130 may be maintained in a stable posture to move.

The align arm part 130a may stop the secondary battery B so that the secondary battery B ascending by the support unit 120 is disposed at a reference position (datumn). Here, the reference position may be a position at which a distance between the lower end E of a pouch sealing part that is an area, on which the sealing unit 160 seals the pouch 20, and the upper end C of the cup part 21 of the pouch becomes a predetermined distance d (see FIG. 3). For this, the align unit 130 (specifically, the align arm part 130a) may be disposed at a pre-designed or set height in relation to the sealing unit 160.

Referring to FIG. 5, the align unit 130 may include a first align unit 131 and a second align unit 132. The first align unit 131 and the second align unit 132 may be spaced a predetermined distance from each other on the basis of the longitudinal direction L of the secondary battery B. In addition, as illustrated in FIG. 5, the predetermined distance at which the first align unit 131 and the second align unit 132 are spaced apart from each other may be less than a distance at which two cylinder members 171 are spaced apart from each other.

The pusher unit 140 may be configured to press the secondary battery B from both sides and fix the position of the secondary battery B after the secondary battery B is stopped by the align unit 130. The pusher unit 140 may be provided in a pair, which are provided at both sides of the secondary battery B, respectively. The pusher unit 140 may move in a direction approaching the secondary battery B to press the secondary battery B from both the sides.

In addition, the pusher unit 140 may be in a state in which the secondary battery is not pressed when the secondary battery B ascends by the support unit 120. Here, the pusher unit 140 may serve as a guide for the upward movement of the secondary battery B. That is, if the support unit 120 only supports the bottom of the secondary battery B, there is a risk that the secondary battery B, which stands vertically, falls over to either side when moving upward due to the support unit 120. However, since the pusher unit 140 is disposed at a predetermined distance at each of both the sides of the secondary battery B, even if the secondary battery B tries to fall over to either side, the pusher unit 140 may support the secondary battery B so as not to fall over. In addition, when the secondary battery reaches its regular position by the align unit 130, the pusher unit 140 may fix the secondary battery by applying a pressure from both the sides.

The piercing unit 150 may be configured to form a hole in a portion of the pouch 20 after the pusher unit 140 fixes the position of the secondary battery B. The piercing unit 150 may have a configuration including a sharp pin, etc. The punched portion of the pouch 20 may be a portion of a gas pocket part 22. The piercing unit 150 may form a hole in an upper portion of the gas pocket part 22. Thus, the gas may be discharged smoothly. In addition, the hole may be formed in plurality. The plurality of holes may be arranged at a predetermined interval along the longitudinal direction L of the secondary battery B.

The sealing unit 160 may be configured to seal the pouch 20 between the punched portion of the pouch 20, in which the piercing unit 150 has made the hole, and a cup part 21 of the pouch, in which the electrode assembly 10 is accommodated. The portion sealed by the sealing unit 160 may be a pouch sealing part 250. In addition, the pouch sealing part 250 may be a sealing part provided by the main sealing that is previously reviewed in the background art.

The apparatus 100 for manufacturing the secondary battery according to Embodiment 1 of the present invention may further include a moving unit 170. The moving unit 170 may be configured to allow the support unit 120 to move upward. The moving unit 170 may specifically include a cylinder member 171 and an elastic member 172. The cylinder member 171 may have a configuration that includes a cylinder to move upward. The cylinder member 171 may serve to provide power for the support unit 120 to move vertically. The elastic member 172 may have a configuration that is stretchable in a direction parallel to the direction in which the secondary battery B moves upward. The cylinder member 171 may support the support unit 120 through the elastic member 172. The elastic member 172 may be, for example, a spring.

Due to the presence of the elastic member 172, the secondary battery B may not be damaged during the process of stopping the secondary battery B by the align unit 130. If there is no elastic member 172, there may be a slight difference between a point, at which the align unit 130 strops the secondary battery B, and a point, at which the support unit 120 allows the secondary battery B to completely ascend, to damage the secondary battery B. That is, the secondary battery B ascending by the support unit 120 may be stopped by the align arm part 130a, and the secondary battery B may be stopped when the align arm part 130a is caught by the cup part 21 of the secondary battery B. In other words, the align arm part 130a may support and stop the cup part 21 of the secondary battery B. However, if the support unit 120 ascends more even in a state in which the align arm part 130a blocks the cup part 21 of the secondary battery B to allow the cup part 21 to stands, the cup part 21 of the secondary battery B may be damaged.

However, if there is the elastic member 172, force caused by this error may be absorbed by the elastic member 172 as it is compressed, and thus, the cup part 21 of the secondary battery B may not be damaged. That is, in a situation in which the secondary battery B is pressed by force due to the error, the elastic member 172 may be pressed instead to prevent the secondary battery B from being damaged.

Particularly, in a case in which there are two cylinder members 171 and two align units 130 as in FIG. 5, degrees to which the two cylinder members 171 ascend may not be completely identical due to the error. In this case, a situation in which the secondary battery B is in contact with the first align unit 131 but is not in contact with the second align unit 132 may occur. In this case, the secondary battery B has also to be in contact with the second align unit 132 to become the reference position, and thus, the two cylinders may ascend more. In this case, since there is an elastic unit, the cup part 21 of the secondary battery B may not be damaged at the portion at which the first align unit 131 is disposed. The elastic member 172 may solve this problem.

As reviewed above, in the apparatus 100 for manufacturing the secondary battery according to Embodiment 1 of the present invention, the die-sealing gap d that is a predetermined distance may be provided by a design of the distance between the lower end E of the pouch sealing part 250 and the upper end C of the cup part 21 of the pouch even while performing the sealing in the state in which the secondary battery B stands vertically. That is, the secondary battery B may be stopped at the reference position for this to perform the sealing. Thus, even though the secondary battery B is in the vertically standing state, the main sealing may be performed at a precise position that precisely secures the area for the double side folding.

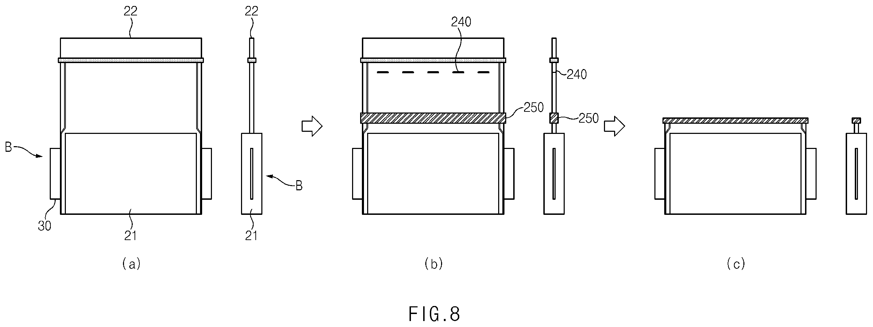

FIG. 8 is front and side views illustrating processes of post-processing the secondary battery B that varies according to an embodiment of the present invention.

If the main sealing is capable of being performed in the state in which the secondary battery B is in the vertically standing state, the post-processing process of the secondary battery B may be simplified. Referring to FIG. 8, the post-processing process of the secondary battery B may be simplified into an activation charging process, a piercing process, a main-sealing process, and a trimming process.

First, referring to FIG. 8(a), the activation charging process may be a process of charging the initial secondary battery B. In this process, the electrolyte and the electrode inside the pouch 20 react during the charging to generate gases such as C₂H₄, CO, C₂H₂, H₂, and CO₂. The gases generated as described above may be removed in a degas process.

Referring to FIG. 2(b), the piercing process and the main-sealing process may be performed as the degas process. The piercing process may be a process of forming a hole in the gas pocket part 22 through a sharp unit to release a gas to the outside. A portion in which the hole is formed may be a piercing part 240. This process may be performed within the chamber 110 having vacuum. The vacuum has to be formed outside so that the gas inside the pouch 20 is escaped smoothly.

The main-sealing process may be an operation of sealing the pouch 20 at a position between the piercing part 240 formed by the piercing process and the cup part 21 of the pouch. The portion sealed as described above may be a pouch sealing part 250 that becomes the main-sealing part. Due to the effects of the present invention discussed above, this main-sealing process may be performed in the state in which the secondary battery B stands vertically. Even when performed in this manner, a reference of the die-sealing gap d may be satisfied. Thus, the main sealing may be a process that precisely secures the area for the double side folding. The main-sealing process may satisfy the reference while performing the sealing at a position that is more biased toward the pouch cup part 21 than the piercing part 240. Thus, there is no need to form the pouch gas pocket part 22 having a long length. As a result, the effect of reducing the cost of the pouch may be achieved through the reduction of the pouch gas pocket part 22.

In addition, in the apparatus 100 for manufacturing the secondary battery according to Embodiment 1 of the present invention, in the post-processing process of the pouch-type secondary battery B, the main sealing may be performed in the state in which the secondary battery B vertically stands to eliminate the pre-sealing and the pre-cutting, thereby reducing an unnecessary manufacturing equipment layout.

FIG. 8(c) represents the trimming process, and the explanation is substituted with that described previously in FIG. 2(e).

### Embodiment 2

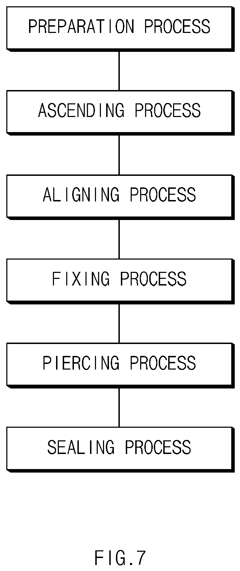

FIG. 6 is a side view illustrating a process of post-processing a secondary battery B using the apparatus 100 for manufacturing the secondary battery according to an embodiment of the present invention. FIG. 7 is a diagram illustrating a method for manufacturing a secondary battery B according to Embodiment 2 of the present invention.

In Embodiment 2 of the present invention, a method for manufacturing a secondary battery B using the apparatus 100 for manufacturing the secondary battery according to Embodiment 1 is described, and in this respect, Embodiment 2 is different from Embodiment 1.

The contents that are duplicated with Embodiment 1 will be omitted as much as possible, and Embodiment 2 will be described with a focus on the differences. That is, it is obvious that the contents that are not described in Embodiment 2 may be regarded as the contents of Embodiment 1 if necessary.

Referring to FIGS. 6 and 7, the method for manufacturing the secondary battery B according to Embodiment 2 of the present invention relates to a method for manufacturing a secondary battery B including an electrode assembly 10 and a pouch 20 that accommodates the electrode assembly 10 in a cup part 21 having a recessed shape, and the method may include a preparation process, an ascending process, an aligning process, a fixing process, a piercing process, and a sealing process.

Referring to FIG. 6(a), the preparation step may be a process of disposing the secondary battery B inside a chamber 110 in which vacuum is formed. A support unit 120 may support the secondary battery B, and a pusher unit 140 may be in an opened state. The secondary battery B may be disposed between a pair of pusher units 140. A piercing unit 150 and a sealing unit 160 may be remained in their original positions with moving.

Referring to FIG. 6B, the ascending process may be a process of allowing the secondary battery B to move upward U using the support unit 120 that supports the secondary battery B disposed inside the chamber 110. A cylinder member 171 may move upward, and the support unit 120 may move upward by the ascending force of the cylinder member 171. An elastic member 172 may be disposed between the cylinder member 171 and the support unit 120 to buffer an impact. The elastic member 172 may include a spring. When the cylinder member 171 ascends, the support unit 120 may ascend through the elastic member 172.

However, in this case, before the ascending process, an align unit 130 may further include a forward moving process in which the align unit 130 moves F in a direction that is closer to the secondary battery B. In the forward moving process of the align unit, the align unit 130 may move horizontally in the direction that is closer to the secondary battery B and then be stationary.

Referring to FIG. 6(c), the aligning process may be a process of stopping the secondary battery B by using the align unit 130 so that the secondary battery B ascending by the support unit 120 is disposed at a reference position. That is, when the cup part 21 of the ascending secondary battery B is in contact with the align arm part 130a, the secondary battery B may be stopped at the reference position.

Referring to FIG. 6(d), the fixing process may be a process of fixing the position of the secondary battery B to the reference position by applying a pressure to the secondary battery B from both sides using the pusher unit 140 after the secondary battery B is stopped in the aligning process. In this case, even if the align unit 130 moves (or is absent), the secondary battery B may be continuously fixed at the reference position.

Thus, in this aspect, the method for manufacturing the secondary battery B according to Embodiment 2 of the present invention may further include, after the fixing process, a backward moving process of the align unit 130, in which the align unit 130 moves in a direction R that is away from the secondary battery B (see FIG. 6(e)).

Referring to FIG. 6(f), the piercing process may be a process of forming a hole in a portion of the pouch 20 using the piercing unit 150 after fixing the position of the secondary battery B in the fixing process. A gas generated in an activation charging process is discharged (degas) through the hole formed as described above.

The piercing process may be a process of forming a hole in the gas pocket part 22 through a sharp unit to release a gas to the outside. A portion in which the hole is formed may be a piercing part 240. This process may be performed within the chamber 110 having vacuum. The vacuum has to be formed outside so that the gas inside the pouch 20 is escaped smoothly.

Referring to FIG. 6(f), the sealing process may be a process of sealing the pouch 20 using the sealing unit 160 between a portion of the pouch 20, in which the hole is formed, and the cup part 21 of the pouch, in which the electrode assembly 10 is accommodated.

The sealing process may be an operation of sealing the pouch 20 at a position between the hole formed by the piercing process (i.e., the piercing part 240) and the cup part 21 of the pouch. This may be the main-sealing process described above. The sealing process may be performed in a state in which the secondary battery B stands vertically. Even when performed in this manner, a reference of the die-sealing gap d may be satisfied. Thus, in the sealing process, an area for double side folding may be accurately secured. The sealing process may satisfy the reference while performing the sealing at a position that is more biased toward the pouch cup part 21 than the hole of the piercing portion 240. Thus, there is no need to form the pouch gas pocket part 22 having a long length. As a result, the effect of reducing the cost of the pouch may be achieved through the reduction of the pouch gas pocket part 22.

In addition, as described above, in the method for manufacturing the secondary battery according to Embodiment 2 of the present invention, in the post-processing process of the pouch-type secondary battery B, the main sealing may be performed in the state in which the secondary battery B vertically stands to eliminate the pre-sealing and the pre-cutting, thereby reducing an unnecessary manufacturing equipment layout.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

10: Electrode assembly
20: Pouch
21: Cup part
22: Gas pocket part
23: Pre-sealing part
24: Piercing part
25: Main-sealing part
30: Electrode lead
100: Apparatus for manufacturing secondary battery
110: Chamber
120: Support
130: Align unit
130a: Align arm part
130b: Align body part
131: First align unit
132: Second align unit
140: Pusher unit
150: Piercing unit
160: Sealing unit
170: Moving unit
171: Cylinder member
172: Elastic member
250: Pouch sealing part
B: Secondary battery
C: Upper end of cup part
E: Lower end of pouch sealing part
d: Die-sealing gap

## Claims

1. An apparatus for manufacturing a secondary battery comprising an electrode assembly and a pouch configured to accommodate the electrode assembly in a cup part having a recessed shape, the apparatus comprising:
a chamber having vacuum therein;
a support unit configured to support the secondary battery (B) disposed inside the chamber and allow the secondary battery to move upward;
an align unit configured to stop the secondary battery so that the secondary battery ascending by the support unit is disposed at a reference position;
a pusher unit configured to press the secondary battery from both sides so as to fix the position of the secondary battery after the secondary battery is stopped by the align unit;
a piercing unit configured to define a hole in a portion of the pouch after fixing the position of the secondary battery by the pusher unit; and
a sealing unit configured to seal the pouch between the portion of the pouch, in which the hole is defined by the piercing unit, and the cup part of the pouch, in which the electrode assembly is accommodated.

2. The apparatus of claim 1, wherein the pusher unit is configured to guide the ascending movement of the secondary battery when the secondary battery moves upward by the support unit.

3. The apparatus of claim 1, wherein the align unit comprises an align arm part configured to support the cup part of the pouch and stop the secondary battery.

4. The apparatus of claim 3, wherein the align unit comprises an align body part extending downward from an end of the align arm part.

5. The apparatus of claim 3, wherein the align arm part is configured to stop the secondary battery so that the secondary battery is disposed at the reference position, and
the reference position is defined so that a distance between a lower end (E) of the pouch sealing part that is an area, on which the pouch is sealed by the sealing unit, and an upper end (C) of the cup part of the pouch is defined as a predetermined distance (d).

6. The apparatus of claim 1, wherein the support unit has a shape extending in a longitudinal direction (L) of the secondary battery.

7. The apparatus of claim 6, further comprising a moving unit configured to allow the support unit to move upward.

8. The apparatus of claim 7, wherein the moving unit comprises:
a cylinder member that is movable vertically; and
an elastic member that is stretchable in a direction parallel to the direction in which the secondary battery moves upward,
wherein the cylinder member is configured to support the support unit through the elastic member.

9. The apparatus of claim 1, wherein the align unit comprises a first align unit and a second align unit,
wherein the first align unit and the second align unit are spaced a predetermined distance from each other in the longitudinal direction of the secondary battery.

10. A method for manufacturing a secondary battery comprising an electrode assembly and a pouch configured to accommodate the electrode assembly in a cup part having a recessed shape, the method comprising:
a preparation process of disposing the secondary battery inside a chamber having vacuum therein;
an ascending process of allowing the secondary battery to move upward by using a support unit that supports the secondary battery disposed inside the chamber;
an aligning process of stopping the secondary battery using an align unit so that the secondary battery ascending by the support unit is disposed at a reference position;
a fixing process of pressing the secondary battery from both sides by using a pusher unit to fix a position of the secondary battery after the secondary battery is stopped in the aligning process;
a piercing process of forming a hole in a portion of the pouch by using a piercing unit after the position of the secondary battery is fixed in the fixing process; and
a sealing process of sealing the pouch by using a sealing unit between a portion of the pouch, in which the hole is formed, and a cup part of the pouch, in which the electrode assembly is accommodated.

11. The method of claim 10, further comprising, before the ascending process, a forward moving process of the align unit, in which the align unit moves in a direction closer to the secondary battery.

12. The method of claim 10, further comprising, after the fixing process, a backward moving process of the align unit, in which the align unit moves in a direction away from the secondary battery.
